(19) Europäisches Patentamt
European Patent Office
Office européen des brevets

(11) EP 2 066 892 B1

(12) **FASCICULE DE BREVET EUROPEEN**

(45) Date de publication et mention
de la délivrance du brevet:
**30.12.2009 Bulletin 2009/53**

(21) Numéro de dépôt: **07848367.4**

(22) Date de dépôt: **24.09.2007**

(51) Int Cl.:
*F02D 41/00* (2006.01)     *F02D 21/08* (2006.01)
*F02M 25/07* (2006.01)

(86) Numéro de dépôt international:
**PCT/FR2007/051997**

(87) Numéro de publication internationale:
**WO 2008/037915 (03.04.2008 Gazette 2008/14)**

(54) **SYSTEME DE COMMANDE D'UN MOTEUR À COMBUSTION INTERNE DE VÉHICULE AUTOMOBILE COMPRENANT UN CIRCUIT DE RECIRCULATION DES GAZ D'ÉCHAPPEMENT DU MOTEUR MUNI D'UNE VANNE DE RECIRCULATION COMMANDÉE**

STEUERSYSTEM FÜR DEN VERBRENNUNGSMOTOR EINES KRAFTFAHRZEUGES MIT ABGASRÜCKFÜHRUNG MIT GESTEUERTEM RÜCKFÜHRUNGSVENTIL

CONTROL SYSTEM FOR A MOTOR VEHICLE INTERNAL COMBUSTION ENGINE THAT COMPRISES AN ENGINE EXHAUST GAS RECIRCULATION CIRCUIT PROVIDED WITH A CONTROLLED RECIRCULATION VALVE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **25.09.2006 FR 0608375**

(43) Date de publication de la demande:
**10.06.2009 Bulletin 2009/24**

(73) Titulaire: **Renault SAS**
**92100 Boulogne Billancourt (FR)**

(72) Inventeurs:
• **TURPIN, Thomas**
**91400 Orsay (FR)**
• **POIRIER, Christian**
**93000 Bobigny (FR)**
• **QUETELART, Florent**
**91760 Itteville (FR)**

(56) Documents cités:
**DE-A1- 10 158 261     FR-A1- 2 878 571**
**US-B1- 6 311 679**

EP 2 066 892 B1

**Description**

La présente invention porte sur un système de commande d'un moteur à combustion interne de véhicule automobile comprenant un circuit de recirculation des gaz d'échappement du moteur muni d'une vanne de recirculation commandée. Plus particulièrement, l'invention porte sur le calcul d'un paramètre de correction de la position d'ouverture de la vanne de recirculation.

Les circuits de recirculation des gaz d'échappement, ou circuits EGR permettent de prélever une partie des gaz d'échappement émis par le moteur pour les réinjecter dans le circuit d'admission d'air du moteur. La réintroduction de gaz d'échappement en entrée du moteur modifie la combustion interne du moteur et diminue le taux d'oxydes d'azotes $NO_x$ émis dans les gaz d'échappement du moteur.

Dans ces systèmes, la proportion des gaz d'échappement recyclés est contrôlée par une vanne dite vanne de recirculation ou vanne EGR. Pour qu'un système de recirculation soit performant, il est nécessaire de commander l'ouverture de la vanne de recirculation de manière précise. Or, les systèmes de recirculation des gaz d'échappement ont tendance à s'encrasser et sont sujets à l'apparition de fuites au cours du temps. On connaît des systèmes et procédés permettant de maintenir les performances d'un système de recirculation des gaz d'échappement au cours du temps.

Le document FR 0412740 propose un système et un procédé de commande d'un moteur à combustion interne comprenant un circuit de recirculation des gaz d'échappement équipé d'une vanne de recirculation dont l'ouverture est commandée pour modifier la quantité de gaz d'échappement réinjectée dans le moteur. Ce document décrit l'utilisation d'un paramètre de correction de la position d'ouverture de la vanne de recirculation, qui dépend de la position d'ouverture de ladite vanne, d'une pression de suralimentation de référence, de la pression de suralimentation mesurée dans le circuit d'admission d'air en amont du circuit de recirculation, et d'une valeur de variation de pression.

La présente invention a notamment pour but d'améliorer la précision du paramètre de correction, à moindre coût.

Selon un aspect de l'invention, il est proposé un système de commande d'un moteur à combustion interne de véhicule automobile, suralimenté en air, comprenant un circuit de recirculation des gaz d'échappement du moteur muni d'une vanne de recirculation commandée permettant de réguler le débit de gaz recirculés, et une unité de commande électronique. Laite unité de commande électronique est adaptée pour calculer un paramètre de correction C de la position d'ouverture EGR de ladite vanne de recirculation, dépendant de la position d'ouverture EGR de ladite vanne de recirculation et d'une pression de suralimentation de référence $P_2^{ref}$. Le système comprend des premiers moyens de détermination adaptés pour déterminer ladite pression de suralimentation de référence $P_2^{ref}$, lorsque le kilométrage du véhicule est inférieur à un premier seuil $S_1$, en fonction de la position d'ouverture EGR, à partir d'une pression de suralimentation moyenne $P_2^{moy}$, établie sur un intervalle de temps prédéterminé, de la pression de suralimentation $P_2$ mesurée en amont dudit circuit de recirculation, et d'un traitement appliqué à ladite pression de suralimentation moyenne $P_2^{moy}$ en fonction d'un premier ensemble de paramètres de fonctionnement du moteur.

L'utilisation d'une telle pression de suralimentation de référence $P_2^{ref}$ dans le calcul du paramètre de correction C de la position d'ouverture EGR de la vanne de recirculation permet d'améliorer la précision du calcul du paramètre de correction C de la position d'ouverture EGR de la vanne de recirculation.

Dans un mode de réalisation, ledit premier ensemble de paramètres de fonctionnement du moteur comprend une première température de suralimentation $T_2$ mesurée en amont dudit circuit de recirculation, et/ou une deuxième température de suralimentation $T_2\big|_{T_{ext}}$ déterminée en fonction d'une température d'air extérieur $T_{ext}$ et de la pression de suralimentation $P_2$, et/ou une troisième température de suralimentation $T_2\big|_{T_{ext}^{ref}}$ déterminée en fonction d'une température d'air extérieur de référence $T_{ext}^{ref}$ et de la pression de suralimentation $P_2$.

La précision du paramètre de correction C de la position d'ouverture EGR de la vanne de recirculation est ainsi améliorée.

Dans un mode de réalisation, ledit premier ensemble de paramètres de fonctionnement du moteur comprend une variation $\dfrac{\partial P_2}{\partial Q_{sys}}\bigg|_{Q_{sys0}}$ de la pression de suralimentation $P_2$ correspondant à une variation du débit de carburant $Q_{sys}$ autour d'un débit de carburant prédéterminé $Q_{sys0}$ en fonction de la vitesse du véhicule, et un débit moyen de carburant $Q_{sys}^{moy}$ établi sur un intervalle de temps prédéterminé ou un débit moyen de carburant $Q_{sys1}^{ref}$ établi sur un intervalle de temps prédéterminé pour la première position d'ouverture EGR traitée.

La précision du paramètre de correction C de la position d'ouverture EGR de la vanne de recirculation est ainsi améliorée.

Dans un mode de réalisation, ledit premier ensemble de paramètres de fonctionnement du moteur comprend une variation $\dfrac{\partial P_2}{\partial EGR}$ de la pression de suralimentation $P_2$ correspondant à une variation de la position d'ouverture EGR autour de la position d'ouverture EGR courante de la vanne de recirculation en fonction de la vitesse du véhicule, et une position d'ouverture moyenne $EGR_{moy}$ établie sur un intervalle de temps prédéterminé ou la position d'ouverture souhaitée $EGR_{cons}$ de la vanne de recirculation.

La précision du paramètre de correction C de la position d'ouverture EGR de la vanne de recirculation est ainsi améliorée.

Dans un mode de réalisation, ledit paramètre de correction C étant, en outre, dépendant d'une pression de suralimentation actualisée $P_2^{actu}$ dépendant d'une pression de suralimentation intermédiaire $P_2^{int}$, le système comprend des deuxièmes moyens de détermination adaptés pour déterminer ladite pression de suralimentation intermédiaire $P_2^{int}$, lorsque le kilométrage du véhicule est supérieur à un deuxième seuil $S_2$ ou lorsque le kilométrage du véhicule dépasse d'un troisième seuil $S_3$ le kilométrage de la dernière détermination de ladite pression de suralimentation intermédiaire $P_2^{int}$, en fonction de la position d'ouverture EGR, à partir d'une pression de suralimentation moyenne $P_2^{moy}$, établie sur un intervalle de temps prédéterminé, de la pression de suralimentation $P_2$ mesurée en amont dudit circuit de recirculation, et d'un traitement appliqué à ladite pression de suralimentation moyenne $P_2^{moy}$ en fonction d'un deuxième ensemble de paramètres de fonctionnement du moteur.

On entend par pression de suralimentation $P_2$ mesurée en amont dudit circuit de recirculation, la pression mesurée dans le circuit d'admission d'air du moteur, en amont du circuit de recirculation, en considérant le sens de circulation de l'air comprimé alimentant le moteur.

L'utilisation d'une telle pression de suralimentation actualisée $P_2^{actu}$ dans le calcul du paramètre de correction C de la position d'ouverture EGR de la vanne de recirculation permet d'améliorer la précision du calcul du paramètre de correction C de la position d'ouverture EGR de la vanne de recirculation.

Dans un mode de réalisation, ledit deuxième ensemble de paramètres de fonctionnement du moteur comprend une première température de suralimentation $T_2$ mesurée en amont du circuit de recirculation, et/ou une deuxième température de suralimentation $T_2\big|_{T_{ext}}$ déterminée en fonction d'une température d'air extérieur $T_{ext}$ et de la pression de suralimentation $P_2$, et/ou une troisième température de suralimentation $T_2\big|_{T_{ext}^{ref}}$ déterminée en fonction d'une température d'air extérieur de référence $T_{ext}^{ref}$ et de la pression de suralimentation $P_2$.

La précision du paramètre de correction C de la position d'ouverture EGR de la vanne de recirculation est ainsi améliorée.

Selon un mode de réalisation, ledit deuxième ensemble de paramètres de fonctionnement du moteur comprend une variation $\dfrac{\partial P_2}{\partial Q_{sys}}\bigg|_{Q_{sys0}}$ de la pression de suralimentation $P_2$ correspondant à une variation du débit de carburant $Q_{sys}$ autour d'un débit de carburant prédéterminé $Q_{sys0}$ en fonction de la vitesse du véhicule, et un débit moyen de carburant $Q_{sys}^{moy}$ établi sur un intervalle de temps prédéterminé $t_2$ ou un débit moyen de carburant $Q_{sys1}^{ref}$ établi sur un intervalle de temps prédéterminé $t_2$ pour la première position d'ouverture EGR traitée.

La précision du paramètre de correction C de la position d'ouverture EGR de la vanne de recirculation est ainsi améliorée.

Dans un mode de réalisation, ledit deuxième ensemble de paramètres de fonctionnement du moteur comprend

une variation $\dfrac{\partial P_2}{\partial EGR}$ de la pression de suralimentation $P_2$ correspondant à une variation de la position d'ouverture EGR autour de la position d'ouverture EGR actuelle de la vanne de recirculation en fonction de la vitesse du véhicule, et une position d'ouverture moyenne $EGR_{moy}$ établie sur un intervalle de temps prédéterminé ou la position d'ouverture souhaitée $EGR_{cons}$ de la vanne de recirculation.

La précision du paramètre de correction C de la position d'ouverture EGR de la vanne de recirculation est ainsi améliorée.

Dans un mode de réalisation, le système comprend, en outre, des troisièmes moyens de détermination adaptés pour déterminer ladite pression de suralimentation actualisée $P_2^{actu}$ à partir de ladite pression de suralimentation intermédiaire $P_2^{int}$, de la pression de suralimentation intermédiaire $P_2^{int}\big|_{dpo}$ calculée pour la dernière position d'ouverture EGR traitée, de la pression de suralimentation de référence $P_2^{reft}\big|_{dpo}$ calculée pour la dernière position d'ouverture EGR traitée, de la pression de suralimentation de référence $P_2^{reft}\big|_{ppo}$ calculée pour la première position d'ouverture EGR traitée, et de la pression de suralimentation intermédiaire $P_2^{int}\big|_{ppo}$ calculée pour la première position d'ouverture EGR traitée.

La précision du paramètre de correction C de la position d'ouverture EGR de la vanne de recirculation est ainsi améliorée.

Dans un mode de réalisation, ladite unité de commande électronique est adaptée pour calculer ledit paramètre de correction C par la relation suivante : $C = \dfrac{\left( P_2^{actu} - P_2^{ref} \right)}{\dfrac{\partial P_2}{\partial EGR}}$.

D'autres buts, caractéristiques et avantages de l'invention apparaîtront à la lecture de la description suivante, de quelques exemples nullement limitatifs, et faite en référence aux dessins annexés sur lesquels :

- la figure 1 représente de manière schématique un système selon un aspect de l'invention comprenant un moteur diesel pourvu d'un circuit de recirculation des gaz d'échappement et d'un turbocompresseur à géométrie fixe ;
- la figure 2 illustre de manière schématique un système selon un autre aspect de l'invention, et comprenant un moteur diesel muni d'un circuit de recirculation des gaz d'échappement et d'un turbocompresseur à géométrie variable ; et
- la figure 3 est un diagramme illustrant le fonctionnement d'un système selon un aspect de l'invention, par exemple un système de la figure 1 ou de la figure 2.

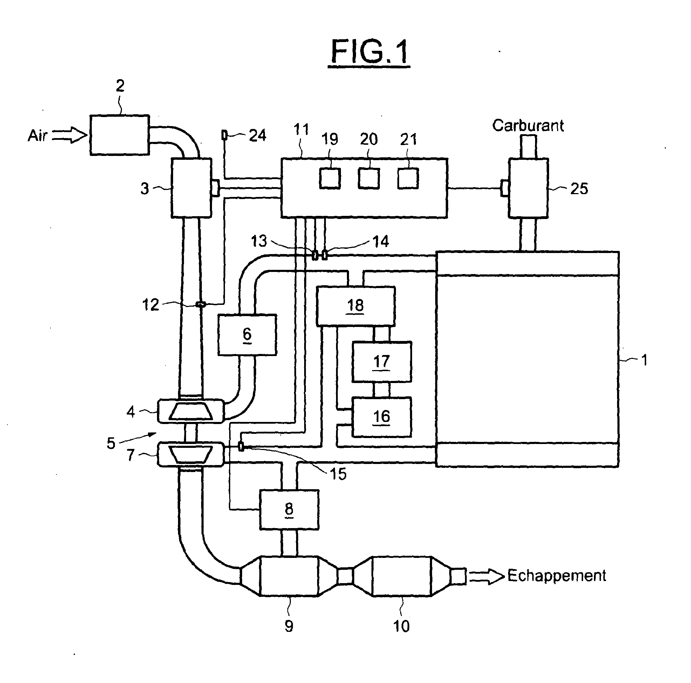

Tel qu'illustré sur la figure 1, le système comprend un moteur à combustion interne de type diesel 1 connecté d'une part à un circuit d'admission destiné à alimenter le moteur a en air frais, et d'autre part à un circuit d'échappement destiné à évacuer les gaz d'échappement produit par le moteur 1.

Le circuit d'admission comprend un filtre à air 2, un premier débitmètre 3 permettant de mesurer le débit d'air frais alimentant le circuit d'admission, un compresseur 4 faisant partie d'un turbocompresseur 5 à géométrie fixe destiné à augmenter la pression de l'air frais d'alimentation, et un échangeur de chaleur 6 destiné à refroidir l'air en sortie du compresseur 4.

Le circuit d'échappement comprend une turbine 7, appartenant au turbocompresseur 5, entraînée par les gaz d'échappement en sortie du moteur 1, une soupape de décharge 8 pour prélever une partie des gaz d'échappement en sortie du moteur 1 afin de moduler le débit des gaz d'échappement en entrée de la turbine 7, un dispositif catalytique 9 et un silencieux 10.

La turbine 7 est une turbine à géométrie fixe qui entraîne le compresseur 4 formant ainsi un turbocompresseur 5 à géométrie fixe. La soupape de décharge 8 est commandée par une unité de commande électronique 11 en fonction de la puissance à fournir par les gaz d'échappement du moteur 1 à la turbine 7.

Un premier capteur de pression 12 est disposé sur le circuit d'admission en amont du compresseur 4, et en aval du premier débitmètre 3. Le circuit d'admission comprend également un deuxième capteur de pression 13 et un premier capteur de température 14, disposés en aval de l'échangeur de chaleur 6 et en amont de la jonction avec le circuit de recirculation des gaz d'échappement du moteur 1. En outre, un troisième capteur de pression 15 est disposé en amont de la turbine 7 pour mesurer la pression en amont de la turbine 7.

Le circuit de recirculation des gaz d'échappement est destiné à injecter une partie des gaz d'échappement du moteur 1 dans le circuit d'admission du moteur 1. Le circuit de recirculation des gaz d'échappement comprend un circuit de dérivation muni d'un module de dérivation 16 et d'un échangeur de chaleur 17 pour refroidir les gaz d'échappement recirculés. Le circuit de recirculation et le circuit de dérivation débouchent sur une vanne de recirculation 18 du circuit de recirculation dont l'ouverture est commandée par l'unité de commande électronique 11 de manière à gérer la quantité des gaz d'échappement du moteur 1 injectés dans le circuit d'admission du moteur 1.

L'unité de commande électronique 11 commande la vanne de recirculation 18, le module de dérivation 16 et la soupape de décharge 8, et comprend trois modules de détermination 19, 20 et 21. Le premier module de détermination 19 est adapté pour déterminer une pression de suralimentation de référence $P_2^{ref}$, le deuxième module de détermination 20 est adapté pour déterminer une pression de suralimentation intermédiaire $P_2^{int}$, et le troisième module de détermination est adapté pour déterminer une pression de suralimentation actualisée $P_2^{actu}$.

En outre, le circuit d'alimentation en carburant du moteur 1 comprend un deuxième débitmètre 25, relié à l'unité de commande électronique 11. Un deuxième capteur de température 24, relié à l'unité de commande électronique 11, permet de mesurer la température extérieure $T_{ext}$.

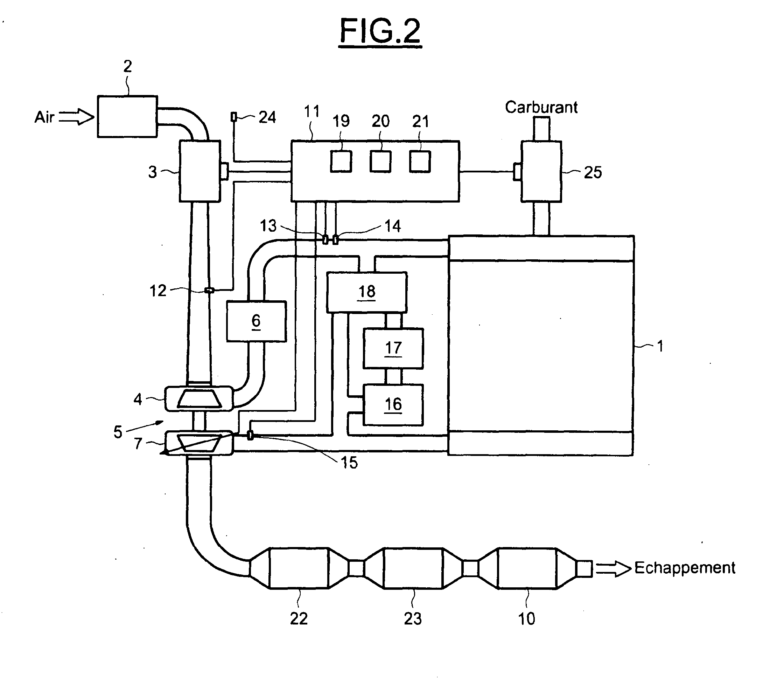

Sur la figure 2, le système est similaire à celui représenté sur la figure 1, excepté que le turbocompresseur à géométrie fixe a été remplacé par un turbocompresseur à géométrie variable dans lequel la puissance fournie par les gaz d'échappement du moteur 1 à la turbine 7 est modulée par des ailettes réglables dont le réglage est commandé par l'unité de commande électronique 11. Par ailleurs, le circuit d'échappement comprend un précatalyseur 22 et un filtre à particules catalytique 23.

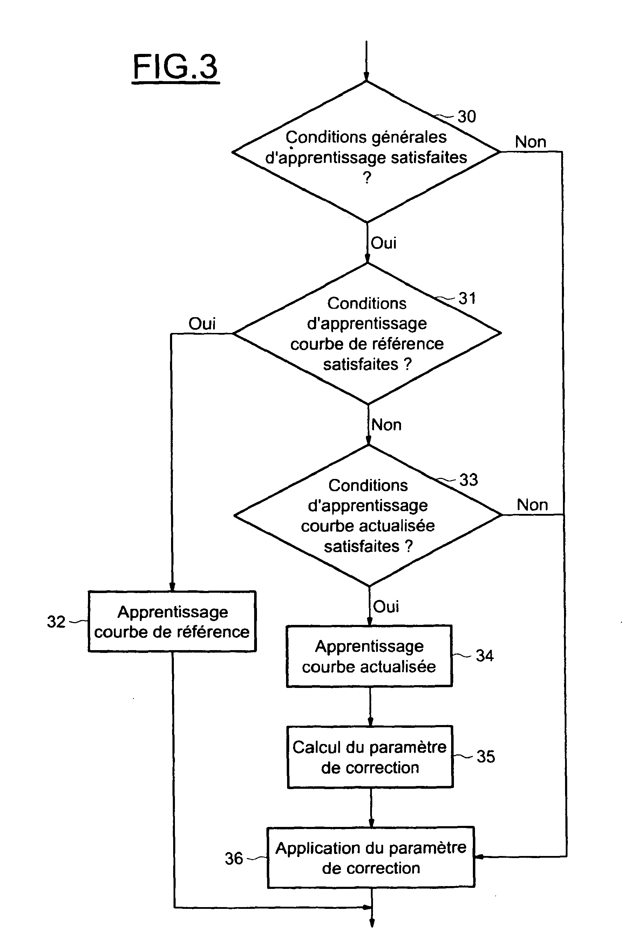

Le diagramme de la figure 3 illustre le calcul du paramètre de correction C en fonction de la position d'ouverture EGR de la vanne de recirculation 18. Tout d'abord (étape 30), l'unité de commande électronique 11 teste si les conditions générales d'apprentissage ou d'enregistrement de données sont satisfaites. Ces conditions peuvent comprendre une certaine stabilité de paramètres de fonctionnement du moteur 1 tels que la vitesse de rotation du moteur 1, le débit d'air d'alimentation du moteur 1, la pression de suralimentation $P_2$, ou le débit de carburant $Q_{sys}$. Ces conditions générales peuvent également comprendre des conditions liées à l'environnement extérieur du véhicule telles que la pression atmosphérique, la température extérieure $T_{ext}$, ou la température du fluide de refroidissement du moteur 1 de sorte que ces paramètres soient compris dans un intervalle de valeurs respectif. Ces conditions générales peuvent également comprendre un état prédéfini d'éléments tels que la climatisation ou la ventilation du moteur 1. En outre, ces conditions générales peuvent également comprendre le respect d'un intervalle de valeurs respectif pour la vitesse du véhicule et/ou la vitesse de rotation du moteur 1 en fonction du rapport de la boite de vitesses enclenché.

Si ces conditions générales d'apprentissage sont satisfaites, l'unité de commande électronique 11 teste (étape 31) si des conditions d'apprentissage spécifiques à la courbe de référence de la pression de suralimentation de référence $P_2^{ref}$ en fonction de la position d'ouverture EGR de la vanne de recirculation 18 sont réunies. L'unité de commande électronique 11 vérifie si le kilométrage du véhicule est inférieur à un premier seuil $S_1$ et si, pour un palier de vitesse courant, la valeur de la pression de suralimentation de référence $P_2^{ref}$ n'a pas encore été déterminée.

Si ces conditions d'apprentissage spécifiques sont réunies, le premier module de détermination 19 de l'unité de commande électronique 11 (étape 32) effectue un apprentissage d'une partie de la courbe de référence de la pression de suralimentation de référence $P_2^{ref}$. Le premier module de détermination 19 fait alors varier la position d'ouverture EGR de la vanne de recirculation 18 sur toute ou partie d'une plage de valeurs, et pour chaque position d'ouverture parmi une pluralité de positions d'ouverture prédéterminées comprises dans cette plage de valeurs, le premier module de détermination 19 détermine une pression de suralimentation moyenne $P_2^{moy}$. Pour une de ces positions prédéterminées d'ouverture EGR de la vanne de recirculation 18, une première temporisation est appliquée pendant un premier intervalle de temps prédéterminé $t_1$ avant de débuter le calcul de la pression de suralimentation moyenne $P_2^{moy}$ afin de s'assurer que la perturbation liée au changement de la position d'ouverture EGR n'ait pas d'impact sur la stabilité de la mesure de la pression moyenne de suralimentation $P_2^{moy}$, qui sera calculée pendant un deuxième intervalle de

temps prédéterminé $t_2$. On détermine la pression de suralimentation de référence $P_2^{ref}$ à partir d'un traitement appliqué à la pression de suralimentation moyenne $P_2^{moy}$ en fonction d'un premier ensemble de paramètres de fonctionnement du moteur.

Ce traitement comprend trois phases pouvant être appliquées dans un ordre quelconque. Dans la suite de la description, seul un exemple d'enchaînement de ces phases est décrit, de manière non limitative. Le deuxième capteur de pression 13 fournit la valeur de la pression de suralimentation $P_2$ à l'unité de commande électronique 11 permettant de calculer la pression de suralimentation moyenne $P_2^{moy}$.

Dans cet exemple, la première phase de traitement est effectuée en fonction de plusieurs températures. Le premier capteur de température 14 fournit à l'unité de commande électronique 11 une première température de suralimentation $T_2$ mesurée en amont du circuit de recirculation, et le deuxième capteur de température 24 fournit la température $T_{ext}$ de l'air extérieur du véhicule à l'unité de commande électronique 11. En outre, l'unité de commande électronique 11 comprend une cartographie mémorisée, non représentée, de la pression de suralimentation $P_2$ en fonction de la température extérieure $T_{ext}$ et de la température de suralimentation $T_2$.

Le premier module de détermination applique une première phase de traitement au moyen de la relation suivante :

$$P_2^{'} = P_2^{moy} - \alpha\left(T_2 - T_2\big|_{T_{ext}}\right) - \beta\left(T_2\big|_{T_{ext}} - T_2\big|_{T_{ext}^{ref}}\right)$$

dans laquelle :

$P_2$      correspond à la pression de suralimentation moyenne ayant subi une première phase de traitement ;

$T_2$      est la température de suralimentation mesurée par le premier capteur de température 14 ;

$T_2\big|_{T_{ext}}$      est une température de suralimentation, lue dans la cartographie embarquée, en fonction de la température extérieure $T_{ext}$ fournie par le deuxième capteur de température 24 ;

$T_{ext}^{ref}$      est une température de référence, par exemple 20°C ;

$T_2\big|_{T_{ext}^{ref}}$      est une température de suralimentation, lue dans la cartographie embarquée, en fonction de la température de référence et

$\alpha$ et $\beta$      sont des coefficients prédéterminés déductibles de la cartographie embarquée.

Une deuxième phase de traitement est ensuite effectuée, en fonction de débits de carburant injecté dans le moteur 1. Cette seconde phase de traitement est effectuée au moyen de la relation suivante :

$$P_2^{''} = P_2^{'} - \frac{\partial P_2}{\partial Q_{sys}}\bigg|_{Q_{sys0}} \left(Q_{sys}^{moy} - Q_{sys1}^{ref}\right)$$

dans laquelle :

$P_2^{''}$      correspond à une phase de traitement de $P_2^{'}$, i.e. à deux phases de traitement successives appliquées à la pression de suralimentation moyenne $P_2^{moy}$ ;

$\left. \dfrac{\partial P_2}{\partial Q_{sys}} \right|_{Q_{sys0}}$ représente la variation de la pression de suralimentation $P_2$ délivrée par le deuxième capteur de pression 13 correspondant à la variation du débit de carburant $Q_{sys}$, délivré par le capteur de débit 25, autour d'un débit de carburant prédéterminé $Q_{sys0}$, en fonction de la vitesse du véhicule ;

$Q_{sys}^{moy}$ est un débit moyen de carburant calculé durant le deuxième intervalle de temps prédéterminé $t_2$ ; et

$Q_{sys1}^{ref}$ est un débit moyen de carburant de référence calculé pour la première position d'ouverture EGR de la vanne de recirculation 18 pour laquelle la pression de suralimentation de référence a été calculée.

Enfin, une troisième phase de traitement est effectuée en fonction de positions d'ouverture EGR de la vanne de recirculation 18 est effectué au moyen de la relation suivante :

$$P_2^{ref} = P_2'' - \frac{\partial P_2}{\partial EGR}\left(EGR_{moy} - EGR_{cons}\right)$$

dans laquelle :

$\dfrac{\partial P_2}{\partial EGR}$ représente la variation de la pression de suralimentation $P_2$ correspondant à une variation de la position d'ouverture EGR autour de la position d'ouverture EGR actuelle de la vanne de recirculation 18 en fonction de la vitesse du véhicule ;

$EGR_{moy}$ est la position d'ouverture moyenne de la vanne de recirculation 18 durant le deuxième intervalle de temps prédéterminé $t_2$ ; et

$EGR_{cons}$ est la position d'ouverture souhaitée ou de consigne de la vanne de recirculation 18.

En revanche, si les conditions d'apprentissage de la courbe de référence ne sont pas satisfaites, l'unité de commande électronique 11 teste (étape 33) si des conditions d'apprentissage d'une courbe actualisée sont satisfaites. Ces conditions sont vérifiées si le kilométrage du véhicule est supérieur à un deuxième seuil $S_2$ prédéterminé, ou si la différence de kilométrage entre la fin du dernier apprentissage d'une courbe actualisée et le kilométrage courant dépasse un troisième seuil $S_3$ prédéterminé.

Si ces conditions sont réalisées, le troisième module de détermination 21 de l'unité de commande électronique 11 détermine la courbe actualisée de la pression de suralimentation actualisée $P_2^{actu}$. A ces fins, le deuxième module de détermination 20 de l'unité de commande électronique 11 détermine la courbe de la pression de suralimentation intermédiaire $P_2^{int}$. Le déroulement de cet apprentissage est similaire à l'apprentissage de la courbe de référence de la pression de suralimentation de référence $P_2^{ref}$, et le traitement appliqué à la pression de suralimentation moyenne $P_2^{moy}$ comprend trois phases de traitement pouvant être effectuées dans n'importe quel ordre. Seul un exemple ordonné de ces trois phases est décrit par la suite, mais n'est aucunement limitatif.

La première phase de traitement est effectuée au moyen de l'équation :

$$P_2' = P_2^{moy} - \alpha\left(T_2 - T_2\big|_{T_{ext}}\right) - \beta\left(T_2\big|_{T_{ext}} - T_2\big|_{T_{ext}^{ref}}\right)$$

dans laquelle :

$P_2'$ correspond à la pression de suralimentation moyenne ayant subi une première phase de traitement ;

$T_2$ est la température de suralimentation mesurée par le premier capteur de température 14 ;

$T_2\big|_{T_{ext}}$ est une température de suralimentation, lue dans la cartographie embarquée, en fonction de la température extérieure $T_{ext}$ fournie par le deuxième capteur de température 24 ;

$T_{ext}^{ref}$ est une température de référence, par exemple 20°C ;

$T_2\big|_{T_{ext}^{ref}}$ est une température de suralimentation, lue dans la cartographie embarquée, en fonction de la température de référence et

$\alpha$ et $\beta$ sont des coefficients prédéterminés déductibles de la cartographie embarquée.

La deuxième phase de traitement est effectuée au moyen de la relation suivante :

$$P_2^{-} = P_2^{\cdot} - \frac{\partial P_2}{\partial Q_{sys}}\bigg|_{Q_{sys0}} \left( Q_{sys}^{moy} - Q_{sys1}^{ref} \right)$$

dans laquelle :

$P_2^{-}$ correspond à une phase de traitement de i.e. à deux phases de traitement successives appliquées à la pression de suralimentation moyenne

$\dfrac{\partial P_2}{\partial Q_{sys}}\bigg|_{Q_{sys0}}$ représente la variation de la pression de suralimentation $P_2$ délivrée par le deuxième capteur de pression 13 correspondant à la variation du débit de carburant $Q_{sys}$, délivré par le capteur de débit 25, autour d'un débit de carburant prédéterminé $Q_{sys0}$, en fonction de la vitesse du véhicule ;

$Q_{sys}^{moy}$ est un débit moyen de carburant calculé durant le deuxième intervalle de temps prédéterminé $t_2$ ; et

$Q_{sys1}^{ref}$ est un débit moyen de carburant de référence calculé pour la première position d'ouverture EGR de la vanne de recirculation 18 pour laquelle la pression de suralimentation de référence a été calculée.

Une troisième phase de traitement est effectuée au moyen de la relation suivante :

$$P_2^{int} = P_2^{''} - \frac{\partial P_2}{\partial EGR}\left( EGR_{moy} - EGR_{cons} \right)$$

dans laquelle :

$\dfrac{\partial P_2}{\partial EGR}$ représente la variation de la pression de suralimentation $P_2$ correspondant à une variation de la position d'ouverture EGR autour de la position d'ouverture EGR actuelle de la vanne de recirculation 18 en fonction de la vitesse du véhicule ;

$EGR_{moy}$ est la position d'ouverture moyenne de la vanne de recirculation 18 durant le deuxième intervalle de temps prédéterminé $t_2$ ; et

$EGR_{cons}$ est la position d'ouverture souhaitée ou de consigne de la vanne de recirculation 18.

Enfin, le troisième module de détermination 21 de l'unité de commande électronique 11 effectue un dernier traitement au moyen de la relation suivante : $P_2^{actu} = \left| P_2^{int} - b \right| \times a$

dans laquelle :

$$b = P_2^{int}\Big|_{dpo} - P_2^{ref}\Big|_{dpo} \quad ;$$

$$a = \frac{P_2^{ref}\Big|_{ppo}}{P_2^{int}\Big|_{ppo} - b} \quad ;$$

$P_2^{int}\Big|_{dpo}$  est la pression de suralimentation intermédiaire calculée pour la dernière position d'ouverture EGR traitée ;

$P_2^{ref}\Big|_{dpo}$  est la position de suralimentation de référence calculée pour la dernière position d'ouverture EGR traitée ;

$P_2^{ref}\Big|_{ppo}$  est la pression de suralimentation de référence calculée pour la première position d'ouverture EGR traitée ;

$P_2^{int}\Big|_{ppo}$  est la pression de suralimentation intermédiaire calculée pour la première position d'ouverture EGR traitée.

Ensuite (étape 35), l'unité de commande électronique 11 calcule le paramètre de correction C, dépendant de la position d'ouverture EGR de la vanne de recirculation 18, au moyen de la relation suivante :

$$C = \frac{P_2^{actu} - P_2^{ref}}{\dfrac{\partial P_2}{\partial EGR}}$$

Pour appliquer le paramètre de correction C (étape 36), l'unité de commande électronique 11 effectue une interpolation, par exemple linéaire, à partir des paramètres de correction C calculés pour les positions prédéterminées d'ouverture EGR de la vanne de recirculation 18 de la plage de valeurs possible.

La présente invention permet d'améliorer la précision du paramètre de correction de la position d'ouverture de la vanne de recirculation d'un moteur diesel, sans surcoût.

**Revendications**

1. Système de commande d'un moteur (1) à combustion interne de véhicule automobile, suralimenté en air, comprenant un circuit de recirculation des gaz d'échappement du moteur (1) muni d'une vanne de recirculation (18) commandée permettant de réguler le débit de gaz recirculés, et une unité de commande électronique adaptée pour calculer un paramètre de correction C de la position d'ouverture EGR de ladite vanne de recirculation (18), dépendant de la position d'ouverture EGR de ladite vanne de recirculation (18) et d'une pression de suralimentation de référence $P_2^{ref}$, **caractérisé en ce qu'**il comprend des premiers moyens de détermination (19) adaptés pour déterminer ladite pression de suralimentation de référence $P_2^{ref}$, lorsque le kilométrage du véhicule est inférieur à un premier seuil $S_1$, en fonction de la position d'ouverture EGR, à partir d'une pression de suralimentation moyenne $P_2^{moy}$, établie sur un intervalle de temps prédéterminé $t_2$, de la pression de suralimentation $P_2$ mesurée en amont dudit circuit de recirculation, et d'un traitement appliqué à ladite pression de suralimentation moyenne $P_2^{moy}$ en fonction d'un premier ensemble de paramètres de fonctionnement du moteur (1).

**2.** Système selon la revendication 1, dans lequel ledit premier ensemble de paramètres de fonctionnement du moteur (1) comprend une première température de suralimentation $T_2$ mesurée en amont dudit circuit de recirculation, et/ou une deuxième température de suralimentation $T_2\big|_{T_{ext}}$ déterminée en fonction d'une température d'air extérieur $T_{ext}$ et de la pression de suralimentation $P_2$, et/ou une troisième température de suralimentation $T_2\big|_{T_{ext}^{ref}}$ déterminée en fonction d'une température d'air extérieur de référence $T_{ext}^{ref}$ et de la pression de suralimentation $P_2$.

**3.** Système selon la revendication 1 ou 2, dans lequel ledit premier ensemble de paramètres de fonctionnement du moteur (1) comprend une variation $\dfrac{\partial P_2}{\partial Q_{sys}}\bigg|_{Q_{sys0}}$ de la pression de suralimentation $P_2$ correspondant à une variation du débit de carburant $Q_{sys}$ autour d'un débit de carburant prédéterminé $Q_{sys0}$ en fonction de la vitesse du véhicule, et un débit moyen de carburant $Q_{sys}^{moy}$ établi sur un intervalle de temps prédéterminé $t_2$ ou un débit moyen de carburant $Q_{sys1}^{ref}$ établi sur un intervalle de temps prédéterminé pour la première position d'ouverture EGR traitée.

**4.** Système selon l'une des revendications précédentes, dans lequel ledit premier ensemble de paramètres de fonctionnement du moteur (1) comprend une variation $\dfrac{\partial P_2}{\partial EGR}$ de la pression de suralimentation $P_2$ correspondant à une variation de la position d'ouverture EGR autour de la position d'ouverture EGR courante de la vanne de recirculation (18) en fonction de la vitesse du véhicule, et une position d'ouverture moyenne $EGR_{moy}$ établie sur un intervalle de temps prédéterminé ou la position d'ouverture souhaitée $EGR_{cons}$ de la vanne de recirculation (18).

**5.** Système selon l'une des revendications précédentes, dans lequel, ledit paramètre de correction C étant, en outre, dépendant d'une pression de suralimentation actualisée $P_2^{actu}$ dépendant d'une pression de suralimentation intermédiaire $P_2^{int}$, le système comprend des deuxièmes moyens de détermination (20) adaptés pour déterminer ladite pression de suralimentation intermédiaire $P_2^{int}$, lorsque le kilométrage du véhicule est supérieur à un deuxième seuil $S_2$ ou lorsque le kilométrage du véhicule dépasse d'un troisième seuil $S_3$ le kilométrage de la dernière détermination de ladite pression de suralimentation intermédiaire $P_2^{int}$, en fonction de la position d'ouverture EGR, à partir d'une pression de suralimentation moyenne $P_2^{moy}$, établie sur un intervalle de temps prédéterminé, de la pression de suralimentation $P_2$ mesurée en amont dudit circuit de recirculation, et d'un traitement appliqué à ladite pression de suralimentation moyenne $P_2^{moy}$ en fonction d'un deuxième ensemble de paramètres de fonctionnement du moteur (1).

**6.** Système selon la revendication 5, dans lequel ledit deuxième ensemble de paramètres de fonctionnement du moteur (1) comprend une première température de suralimentation $T_2$ mesurée en amont dudit circuit de recirculation, et/ou une deuxième température de suralimentation $T_2\big|_{T_{ext}}$ déterminée en fonction d'une température d'air extérieur $T_{ext}$ et de la pression de suralimentation $P_2$, et/ou une troisième température de suralimentation $T_2\big|_{T_{ext}^{ref}}$ déterminée en fonction d'une température d'air extérieur de référence $T_{ext}^{ref}$ et de la pression de suralimentation $P_2$.

**7.** Système selon la revendication 5 ou 6, dans lequel ledit deuxième ensemble de paramètres de fonctionnement du moteur (1) comprend une variation $\left.\dfrac{\partial P_2}{\partial Q_{sys}}\right|_{Q_{sys0}}$ de la pression de suralimentation $P_2$ correspondant à une variation du débit de carburant $Q_{sys}$ autour d'un débit de carburant prédéterminé $Q_{sys0}$ en fonction de la vitesse du véhicule, et un débit moyen de carburant $Q_{sys}^{moy}$ établi sur un intervalle de temps prédéterminé $t_2$ ou un débit moyen de carburant $Q_{sys1}^{ref}$ établi sur un intervalle de temps prédéterminé $t_2$ pour la première position d'ouverture EGR traitée.

**8.** Système selon l'une des revendications 5 à 7, dans lequel ledit deuxième ensemble de paramètres de fonctionnement du moteur (1) comprend une variation $\dfrac{\partial P_2}{\partial EGR}$ de la pression de suralimentation $P_2$ correspondant à une variation de la position d'ouverture EGR autour de la positon d'ouverture EGR actuelle de la vanne de recirculation (18) en fonction de la vitesse du véhicule, et une position d'ouverture moyenne $EGR_{moy}$ établie sur un intervalle de temps prédéterminé ou la positon d'ouverture souhaitée $EOR_{cons}$ de la vanne de recirculation (18).

**9.** Système selon l'une des revendications 5 à 8, comprenant, en outre, des troisièmes moyens de détermination (21) adaptés pour déterminer ladite pression de suralimentation actualisée $P_2^{actu}$ à partir de ladite pression de suralimentation intermédiaire $P_2^{int}$, de la pression de suralimentation intermédiaire $\left.P_2^{int}\right|_{dpo}$ calculée pour la dernière position d'ouverture EGR traitée, de la pression de suralimentation de référence $\left.P_2^{reft}\right|_{dpo}$ calculée pour la dernière position d'ouverture EGR traitée, de la pression de suralimentation de référence $\left.P_2^{reft}\right|_{ppo}$ calculée pour la première position d'ouverture EGR traitée, et de la pression de suralimentation intermédiaire $\left.P_2^{int}\right|_{ppo}$ calculée pour la première position d'ouverture EGR traitée.

**10.** Système selon la revendication 9, dans lequel ladite unité de commande électronique (11) est adaptée pour calculer ledit paramètre de correction C par la relation suivante : $C = \dfrac{\left(P_2^{actu} - P_2^{ref}\right)}{\dfrac{\partial P_2}{\partial EGR}}.$

**Claims**

**1.** System for controlling a supercharged motor vehicle internal combustion engine (1), comprising an engine (1) exhaust gas recirculation circuit equipped with a controlled exhaust gas recirculation valve (18) making it possible to regulate the flow rate of recirculated gases, and an electronic control unit designed to calculate a correction parameter *C* to apply to the open position EGR of the said exhaust gas recirculation valve (18), dependent on the open position EGR of the said exhaust gas recirculation valve (18) and on a reference boost $P_2^{ref}$, pressure **characterized in that** it comprises first determining means (19) designed to determine the said reference boost pressure $P_2^{ref}$, when the distance covered by the vehicle is below a first threshold $S_1$, as a function of the open position EGR, from a mean boost pressure $P_2^{mean}$, established over a predetermined space of time $t_2$, of the boost pressure $P_2$ measured upstream of the said exhaust gas recirculation circuit, and of processing applied to the said mean boost pressure $P_2^{mean}$, as a function of a first set of engine (1) operating parameters.

2. System according to Claim 1, in which the said first set of engine (1) operating parameters comprises a first boost temperature $T_2$ measured upstream of the said exhaust gas recirculation circuit, and/or a second boost temperature $T_2|_{Text}$ determined as a function of an external air temperature $T_{ext}$ and of the boost pressure $P_2$, and/or a third boost temperature $T_2\Big|_{T_{ext}^{ref}}$ determined as a function of a reference external air temperature $T_{ext}^{ref}$, and of the boost pressure $P_2$.

3. System according to Claim 1 or 2, in which the said first set of engine (1) operating parameters comprises a variation $\dfrac{\partial P_2}{\partial Q_{sys}}\bigg|_{Qsys0}$ in the boost pressure $P_2$ corresponding to a variation in the fuel flow rate $Q_{sys}$ about a predetermined fuel flow rate $Q_{sys0}$ as a function of the speed of the vehicle, and a mean fuel flow rate $Q_{sys}^{mean}$ established over a predetermined space of time $t_2$ or a mean fuel flow rate $Q_{sys1}^{ref}$ established over a predetermined space of time for the first open position EGR processed.

4. System according to one of the preceding claims, in which the said first set of engine (1) operating parameters comprises a variation $\dfrac{\partial P_2}{\partial EGR}$ in the boost pressure $P_2$ corresponding to a variation in the open position EGR about the current open position EGR of the exhaust gas recirculation valve (18) as a function of the speed of the vehicle, and a mean open position $EGR_{mean}$ established over a predetermined space of time or the desired open position $EGR_{stpt}$ of the exhaust gas recirculation valve (18).

5. System according to one of the preceding claims, in which, with the said correction parameter C being furthermore dependent on an updated boost pressure $P_2^{update}$ dependent on an intermediate boost pressure $P_2^{int}$, the system comprises second determining means (20) designed to determine the said intermediate boost pressure $P_2^{int}$, when the distance covered by the vehicle is greater than a second threshold $S_2$ or when the distance covered by the vehicle exceeds, by a third threshold amount $S_3$, the distance covered at the last determined value of said intermediate boost pressure $P_2^{int}$, as a function of the open position EGR, on the basis of a mean boost pressure $P_2^{mean}$, established over a predetermined space of time, of the boost pressure $P_2$ measured upstream of the said exhaust gas recirculation circuit, and a processing applied to the said mean boost pressure $P_2^{mean}$ as a function of a second set of engine (1) operating parameters.

6. System according to Claim 5, in which the said second set of engine (1) operating parameters comprises a first boost temperature $T_2$ measured upstream of the said exhaust gas recirculation circuit, and/or a second boost temperature $T_2|_{Text}$ determined as a function of an external air temperature $T_{ext}$ and of the boost pressure $P_2$, and/or a third boost temperature $T_{ext}^{ref}$ determined as a function of a reference exterior air temperature $T_{ext}^{ref}$, and of the boost pressure $P_2$.

7. System according to Claim 5 or 6, in which the said second set of engine (1) operating parameters comprises a variation $\dfrac{\partial P_2}{\partial Q_{sys}}\bigg|_{Qsys0}$ in the boost pressure $P_2$ corresponding to a variation in the fuel flow rate $Q_{sys}$ about a predetermined fuel flow rate $Q_{sys0}$ as a function of the speed of the vehicle, and a mean fuel flow rate $Q_{sys}^{mean}$ established over a predetermined space of time $t_2$ or mean fuel flow rate $Q_{sys1}^{ref}$ established over a predetermined

space of time $t_2$ for the first open position EGR processed.

8. System according to one of Claims 5 to 7, in which the said second set of engine (1) operating parameters comprises a variation $\dfrac{\partial P_2}{\partial EGR}$ in the boost pressure $P_2$ corresponding to a variation in the open position EGR about the present open position EGR of the exhaust gas recirculation valve (18) as a function of the speed of the vehicle, and a mean open position $EGR_{mean}$ established over a predetermined space of time or the desired open position $EGR_{stpt}$ of the exhaust gas recirculation valve (18).

9. System according to one of Claims 5 to 8, further comprising third determining means (21) designed to determine the said updated boost pressure $P_2^{update}$ from the said intermediate boost pressure $P_2^{int}$, from the intermediate boost pressure $P_2^{int}\big|_{lop}$ calculated for the last open position EGR processed, from the reference boost pressure $P_2^{ref}\big|_{lop}$ calculated for the last open position EGR processed, from the reference boost pressure $P_2^{ref}\big|_{fop}$ calculated for the first open position EGR processed, and from the intermediate boost pressure $P_2^{ref}\big|_{fop}$ calculated for the first open position EGR processed.

10. System according to Claim 9, in which the said electronic control unit (11) is designed to calculate the said correction parameter C using the following relationship: $C = \dfrac{\left( P_2^{update} - P\dfrac{ref}{2} \right)}{\dfrac{\partial P_2}{\partial EGR}}$.

**Patentansprüche**

1. Steuersystem für einen aufgeladenen Verbrennungsmotor (1) eines Kraftfahrzeugs mit einem Rückführkreislauf der Abgase des Motors (1), der mit einem gesteuerten Rückführventil (18) versehen ist, das die Einstellung des Durchflusses des rückgeführten Abgases gestattet, und einer elektronischen Steuereinheit, die dazu ausgelegt ist, einen Parameter C zur Korrektur der Öffnungsstellung EGR des Rückführventils (18) in Abhängigkeit von der Öffnungsstellung EGR des Rückführventils (18) und eines Bezugsaufladedrucks $D_2^{bez}$ zu berechnen, **dadurch gekennzeichnet, dass** es erste Bestimmungsmittel (19) enthält, die dazu ausgeführt sind, den Bezugsaufladedruck $D_2^{bez}$ in Abhängigkeit von der Öffnungsstellung EGR, ausgehend von einem über einen vorbestimmten Zeitraum $t_2$ erstellten mittleren Aufladungsdruck $D_2^{mittl}$ des Aufladungsdrucks $D_2$, der stromaufwärts des Rückführkreislaufs gemessen wird, und von einer auf den mittleren Aufladungsdruck $D_2^{mittl}$ in Abhängigkeit von einem ersten Satz von Betriebsparametern des Motors (1) angewandten Behandlung zu bestimmen, wenn der Kilometerstand des Fahrzeugs unter einem ersten Schwellwert $S_1$ liegt.

2. System nach Anspruch 1, bei dem der erste Satz von Betriebsparametern des Motors (1) eine erste Aufladungstemperatur $T_2$, die stromaufwärts des Rückführkreislaufs gemessen wird, und/oder eine zweite Aufladungstemperatur $T_2\big|_{T_{au\beta}}$, die in Abhängigkeit von einer Außenlufttemperatur $T_{au\beta}$ und von dem Aufladungsdruck $D_2$ bestimmt wird, und/oder eine dritte Aufladungstemperatur $T_2\big|_{T_{au\beta}^{bez}}$, die in Abhängigkeit von der Bezugsaußenlufttemperatur $T_{au\beta}^{bez}$ und von dem Aufladungsdruck $D_2$ bestimmt wird, umfasst.

**3.** System nach Anspruch 1 oder 2, bei dem der erste Satz von Betriebsparametern des Motors (1) eine Änderung $\left.\frac{\partial D_2}{\partial Q_{sys}}\right|_{Qsys0}$ des Aufladungsdrucks $D_2$, der einer Änderung des Kraftstoffdurchflusses $Q_{sys}$ um einen vorbestimmten Kraftstoffdurchfluss $Q_{sys0}$ in Abhängigkeit von der Geschwindigkeit des Fahrzeugs entspricht, und einen mittleren Kraftstoffdurchfluss $Q_{sys}^{mittl}$, der über einen vorbestimmten Zeitraum $t_2$ erstellt wird, oder einen mittleren Kraftstoffdurchfluss $Q_{sys1}^{bez}$, der über einen vorbestimmten Zeitraum für die erste Öffnungsstellung EGR behandelt bestimmt wird, umfasst.

**4.** System nach einem der vorhergehenden Ansprüche, bei dem der erste Satz von Betriebsparametern des Motors (1) eine Änderung $\frac{\partial D_2}{\partial EGR}$ des Aufladungsdrucks $D_2$, die einer Änderung der Öffnungsstellung EGR um die Ist-Öffnungsstellung EGR des Rückführventils (18) in Abhängigkeit von der Geschwindigkeit des Fahrzeugs entspricht, und eine mittlere Öffnungsstellung $EGR_{mittl}$, die über einen vorbestimmten Zeitraum erstellt wird, oder die Soll-Öffnungsstellung $EGR_{soll}$ des Rückführventils (18) umfasst.

**5.** System nach einem der vorhergehenden Ansprüche, bei dem, wobei der Korrekturparameter C des Weiteren von einem aktualisierten Aufladungsdruck $D_2^{ak}$ abhängt, der von einem Zwischenaufladungsdruck $D_2^{zw}$ abhängt, das System zweite Bestimmungsmittel (20) umfasst, die dazu ausgeführt sind, den Zwischenaufladungsdruck $D_2^{zw}$ in Abhängigkeit von der Öffnungsstellung EGR, ausgehend von einem über einen vorbestimmten Zeitraum erstellten mittleren Aufladungsdruck $D_2^{zw}$ des Aufladungsdrucks $P_2$, der stromaufwärts des Rückführkreises gemessen wird, und von einer auf den mittleren Aufladungsdruck $D_2^{zw}$ in Abhängigkeit von einem zweiten Satz von Betriebsparametern des Motors (1) angewandten Behandlung, zu bestimmen, wenn der Kilometerstand des Fahrzeugs über einem zweiten Schwellwert $S_2$ liegt oder wenn der Kilometerstand des Fahrzeugs einen dritten Schwellwert $S_3$ des Kilometerstands der letzten Bestimmung des Zwischenaufladungsdrucks $D_2^{zw}$ übersteigt.

**6.** System nach Anspruch 5, bei dem der zweite Satz von Betriebsparametern des Motors (1) eine erste Aufladungstemperatur $T_2$, die stromaufwärts des Rückführkreislaufs gemessen wird, und/oder eine zweite Aufladungstemperatur $T_2\big|_{T_{auß}}$, die in Abhängigkeit von einer Außenlufttemperatur $T_{auß}$ und des Aufladungsdrucks $D_2$ bestimmt wird, und/oder eine dritte Aufladungstemperatur $T_2\big|_{T_{auß}^{bez}}$, die in Abhängigkeit von der Bezugsaußenlufttemperatur $T_{auß}^{bez}$ und des Aufladungsdrucks $D_2$ bestimmt wird, umfasst.

**7.** System nach Anspruch 5 oder 6, bei dem der zweite Satz von Betriebsparametern des Motors (1) eine Änderung $\left.\frac{\partial D_2}{\partial Q_{sys}}\right|_{Qsys0}$ des Aufladungsdrucks $D_2$, die einer Änderung des Kraftstoffdurchflusses $Q_{sys}$ um einen vorbestimmten Kraftstoffdurchfluss $O_{sys0}$ in Abhängigkeit von der Geschwindigkeit des Fahrzeugs entspricht, und einen mittleren Kraftstoffdurchfluss $Q_{sys}^{mittl}$, der über einen vorbestimmten Zeitraum $t_2$ erstellt wird, oder einen mittleren Kraftstoffdurchfluss $Q_{sys1}^{bez}$, der über einen vorbestimmten Zeitraum $t_2$ für die erste Öffnungsstellung EGR behandelt bestimmt wird, umfasst.

**8.** System nach einem der Ansprüche 5 bis 7, bei dem der zweite Satz von Betriebsparametern des Motors (1) eine Änderung $\frac{\partial D_2}{\partial EGR}$ des Aufladungsdrucks $D_2$, die einer Änderung der Öffnungsstellung EGR um die Ist-Öffnungsstellung EGR des Rückführventils (18) in Abhängigkeit von der Geschwindigkeit des Fahrzeugs entspricht, und eine

mittlere Öffnungsstellung EGR$_{\text{mittl}}$, die über einen vorbestimmten Zeitraum erstellt wird, oder die Soll-Öffnungsstellung EGR$_{\text{soll}}$ des Rückführventils (18) umfasst.

9. System nach einem der Ansprüche 5 bis 8, das des Weiteren dritte Bestimmungsmittel (21) umfasst, die dazu ausgeführt sind, den aktualisierten Aufladungsdruck $D_2^{ak}$, ausgehend von dem Zwischenaufladungsdruck $D_2^{zw}$, dem für die letzte Öffnungsstellung EGR behandelt berechneten Zwischenaufladungsdruck $D_2^{zw}\big|_{l\ddot{o}s}$, dem für die letzte Öffnungsstellung EGR behandelt berechneten Bezugsaufladungsdruck $D_2^{bez}\big|_{l\ddot{o}s}$, dem für die erste Öffnungsstellung EGR behandelt berechneten Bezugsaufladungsdruck $D_2^{bez}\big|_{e\ddot{o}s}$ und dem für die erste Öffnungsstellung EGR behandelt berechneten Zwischenaufladungsdruck $D_2^{bez}\big|_{e\ddot{o}s}$ zu bestimmen.

10. System nach Anspruch 9, bei dem die elektronische Steuereinheit (11) dazu ausgeführt ist, den Korrekturparameter C für die folgende Beziehung $C = \dfrac{\left( D_2^{ak} - D\dfrac{\overline{bez}}{2} \right)}{\dfrac{\partial D_2}{\partial EGR}}$ zu berechnen.

## FIG.1

## FIG.2

Air ⟹

2

3

24

11  19  20  21

Carburant

25

13  14

12

6

18

17

16

15

4

5

7

1

22  23  10

⟹ Echappement

EP 2 066 892 B1

## FIG.3

```
                              Conditions générales          ~ 30
                              d'apprentissage satisfaites              Non
                                        ?

                                       │Oui

                                   Conditions              ~ 31
                    Oui           d'apprentissage
                                 courbe de référence
                                   satisfaites ?

                                       │Non

                                   Conditions              ~ 33
                                 d'apprentissage                      Non
                                 courbe actualisée
                                  satisfaites ?

                                       │Oui

     32 ~   Apprentissage
           courbe de référence        Apprentissage
                                     courbe actualisée     ~ 34

                                   Calcul du paramètre
                                     de correction         ~ 35

                   36 ~   Application du paramètre
                              de correction
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0412740